(19) **Europäisches Patentamt / European Patent Office / Office européen des brevets**

(11) **EP 4 060 645 A1**

(12) **EUROPEAN PATENT APPLICATION**
published in accordance with Art. 153(4) EPC

(43) Date of publication:
**21.09.2022 Bulletin 2022/38**

(21) Application number: **20886887.7**

(22) Date of filing: **30.10.2020**

(51) International Patent Classification (IPC):
**G09B 7/04** (2006.01)    **G09B 19/00** (2006.01)
**G06N 3/08** (2006.01)    **G06Q 50/20** (2012.01)

(52) Cooperative Patent Classification (CPC):
**G06N 3/08; G06Q 50/20; G09B 7/04; G09B 19/00**

(86) International application number:
**PCT/JP2020/040868**

(87) International publication number:
**WO 2021/095571 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2019 JP 2019203782**
**17.01.2020 JP 2020006241**

(71) Applicant: **Z-KAI Inc.**
**Mishima-shi, Shizuoka 411-0033 (JP)**

(72) Inventors:
• **WATANABE, Jun**
**Mishima-shi, Shizuoka 411-0033 (JP)**
• **UEDA, Tomoya**
**Mishima-shi, Shizuoka 411-0033 (JP)**
• **SAKURAI, Toshiyuki**
**Mishima-shi, Shizuoka 411-0033 (JP)**

(74) Representative: **MERH-IP Matias Erny Reichl Hoffmann**
**Patentanwälte PartG mbB**
**Paul-Heyse-Strasse 29**
**80336 München (DE)**

(54) **LEARNING EFFECT ESTIMATION DEVICE, LEARNING EFFECT ESTIMATION METHOD, AND PROGRAM**

(57) A learning effect estimation apparatus that can estimate a learning effect for a user while reflecting various aspects of the mechanism of how humans understand things is provided. The learning effect estimation apparatus includes: a model storage unit storing a model that takes learning data as input, the learning data being data on learning results of users and being assigned with categories for different learning purposes, and generates a correct answer probability of each of the users for each of the categories based on the learning data; a correct answer probability generation unit that inputs the learning data to the model to generate the correct answer probability of each of the categories; a correct answer probability database that accumulates time-series data of the correct answer probability for each of the users; and a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

FIG.1

EP 4 060 645 A1

**Description**

[TECHNICAL FIELD]

The present invention relates to learning effect estimation apparatuses, learning effect estimation methods, and a program for estimating learning effect for a user.

[BACKGROUND ART]

An online learning system (Patent Literature 1) that automatically formulates a learning plan based on measurement of learning effect and allows a user to perform the learning online is known.

The online learning system of Patent Literature 1 includes an online learning server and multiple learner's terminals connected with it via the Internet. In response to a request from a learner's terminal, the online learning server provides the requesting terminal with problems for measuring learning effect for a requested subject as problems that are divided into units of multiple measurement items and measurement areas in each of the measurement items. Once answers to the problems given by a learner are transmitted to the server from the terminal to which the problems were provided, the server grades the answers for every measurement area in the respective measurement items, converts the result of grading into assessment values of multiple levels for each measurement item and for every measurement area in the respective measurement items, and presents the assessment values to the learner's terminal. The server presents the learner's terminal with contents of each area that the learner should study in study text for the subject provided by the online learning server and a recommended duration of learning on the basis of the assessment values and for each measurement area in each measurement item.

The online learning system of Patent Literature 1 can present the learner's terminal with the user's attained level in the form of assessment values for multiple measurement areas in multiple measurement items which result from division of the entire range of the subject the user tested from the server. The online learning system also can present the learner's terminal with contents of units that the learner should learn in text provided by the online learning server to the terminal and the time required for it on the basis of assessment values and for each measurement area.

[PRIOR ART LITERATURE]

[PATENT LITERATURE]

Patent Literature 1: Japanese Patent Application Laid Open No. 2012-208143

[SUMMARY OF THE INVENTION]

[PROBLEMS TO BE SOLVED BY THE INVENTION]

The online learning system of Patent Literature 1 merely translates the grading results of problems given for the measurement of learning effect into assessment values, being unable to reflect various aspects of the mechanism of how humans understand things.

Thus, the present invention provides learning effect estimation apparatuses that can estimate a learning effect for a user while reflecting various aspects of the mechanism of how humans understand things.

[MEANS TO SOLVE THE PROBLEMS]

A learning effect estimation apparatus of the present invention includes a model storage unit, a correct answer probability generation unit, a correct answer probability database, and a comprehension and reliability generation unit.

The model storage unit stores a model. The model takes learning data as input, the learning data being data on learning results of users and being assigned with categories for different learning purposes, and generates a correct answer probability of each of the users for each of the categories based on the learning data. The correct answer probability generation unit inputs the learning data to the model to generate the correct answer probability of each of the categories. The correct answer probability database accumulates time-series data of the correct answer probability for each of the users. The comprehension and reliability generation unit acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

[EFFECTS OF THE INVENTION]

The learning effect estimation apparatuses of the present invention can estimate the learning effect for a user while reflecting various aspects of the mechanism of how humans understand things.

[BRIEF DESCRIPTION OF THE DRAWINGS]

FIG. 1 is a block diagram showing a configuration of a learning effect estimation apparatus in a first embodiment.
FIG. 2 is a flowchart illustrating operations of the learning effect estimation apparatus in the first embodiment.
FIG. 3 describes types of learning data.
FIG. 4 shows an example of correlation between categories.
FIG. 5 shows an example where correct answer probabilities of correlated categories vary simultaneously.
FIG. 6 shows an example of precedence-subsequence relation between categories.
FIG. 7 shows an example of categories specified for learning data (content).
FIG. 8 shows examples of time-series data of correct answer probability (comprehension), FIG. 8A showing an example with large variations and FIGs. 8B and 8C showing examples with small variations.
FIG. 9 shows an example of category sets and target categories.
FIG. 10 describes an example of division into cases based on comprehension and reliability.
FIG. 11 shows an example of ideal training data and actual training data.
FIG. 12 shows an example where correct answer probability becomes saturated at a value p lower than 1.
FIG. 13 shows an example of corrected training data generated by insertion of dummy data.
FIG. 14 shows an example of training data reflecting a period in which a user is not solving problems.
FIG. 15 shows an exemplary functional configuration of a computer.

[DETAILED DESCRIPTION OF THE EMBODIMENTS]

An embodiment of the present invention is described below in detail. Components having the same functions are denoted with the same reference characters and redundant descriptions are omitted.

[First Embodiment]

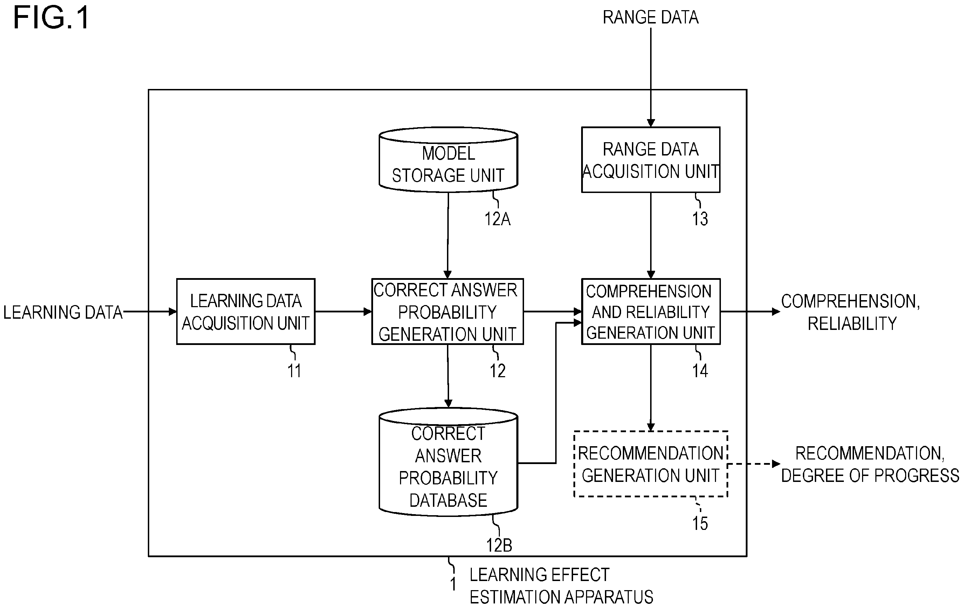

Now referring to FIG. 1, configuration of a learning effect estimation apparatus in a first embodiment is described. As shown in the diagram, a learning effect estimation apparatus 1 of this embodiment includes a learning data acquisition unit 11, a correct answer probability generation unit 12, a model storage unit 12A, a correct answer probability database 12B, a range data acquisition unit 13, a comprehension and reliability generation unit 14, and a recommendation generation unit 15. As indicated by a broken line in the diagram, the recommendation generation unit 15 is not an essential component and may be omitted in some cases.

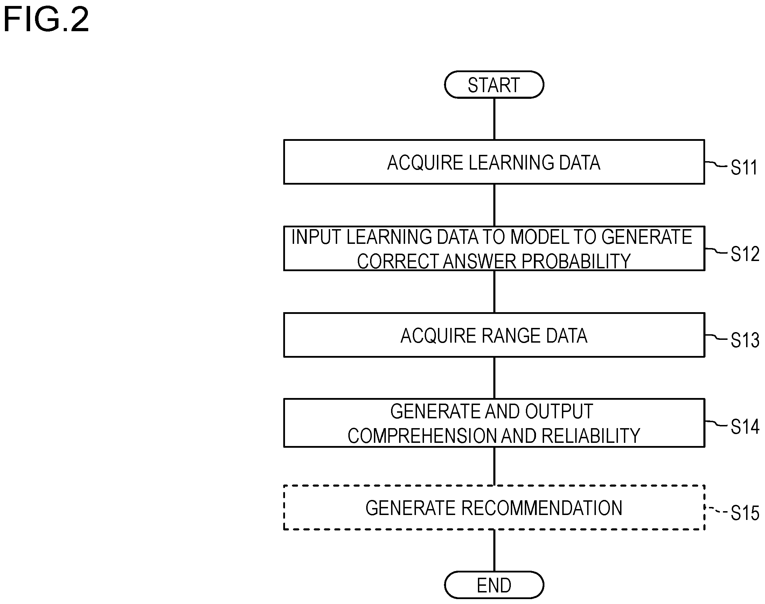

Referring to FIG. 2 and subsequent drawings, detailed operations of the individual components are described.

<Learning data acquisition unit 11>

The learning data acquisition unit 11 acquires learning data (S11). Learning data is data on learning results and learning situations from a user's learning of contents, where contents and learning data are assigned with categories for different learning purposes (hereinafter referred to just as categories) in advance.

[Content and learning data]

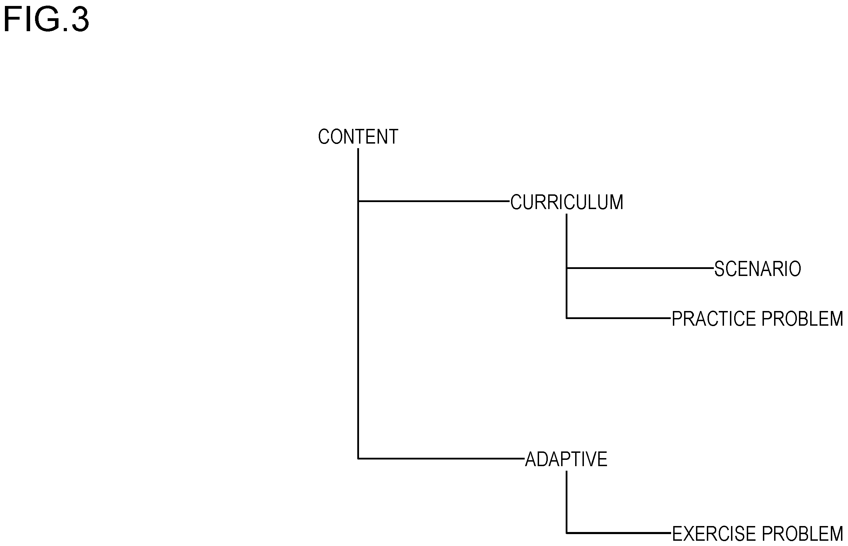

As shown in FIG. 3, content may be provided in two types: curriculum and adaptive. Curriculum can include scenarios and practice problems, for example. Adaptive can include exercise problems, for example.

A scenario refers to content (teaching material) of a type where the learner acquires knowledge through a form other than exercise with problems, such as by reading, listening, making reference to figures, watching video, and the like. Learning data for a scenario is typically data (flags) indicating the results of learning such as completing reading the scenario, completing listening, and completing viewing, and data indicating learning situations such as the time/date and place of learning. Besides them, the number of times or frequency of reading, listening, or viewing of a scenario can be learning data for the scenario.

A practice problem typically means a basic example problem that is inserted between scenarios or after a scenario and checks the learner's comprehension of the immediately preceding scenario. Learning data for a practice problem is typically data that indicates learning results such as trial of practice problems, the number or frequency of trials, correct/incorrect answers, correct answer rate, scores, and details of incorrect answers and/or learning situations such as the time/date and place of learning.

An exercise problem typically means, for example, a group of problems that are given in the form of a test. Learning data for an exercise problem is typically data that indicates learning results such as trial of exercise problems, the number or frequency of trials, correct/incorrect answers, correct answer rate, scores, and details of incorrect answers and/or learning situations such as the time/date and place of learning. Score data of a practice examination may be used as learning data of exercise problems as well.

[Category]

A category indicates a learning purpose that defines content to be learned by the user in a detailed and specific manner. For example, "being able to solve a linear equation" can be defined as category 01, "being able to solve a simultaneous equation" can be defined as category 02, and so on. By further subdividing them, categories like "being able to solve a linear equation by using transposition", "being able to solve a linear equation with parentheses", and "being able to solve a linear equation containing fractions and decimals as coefficients", for example, may also be defined.

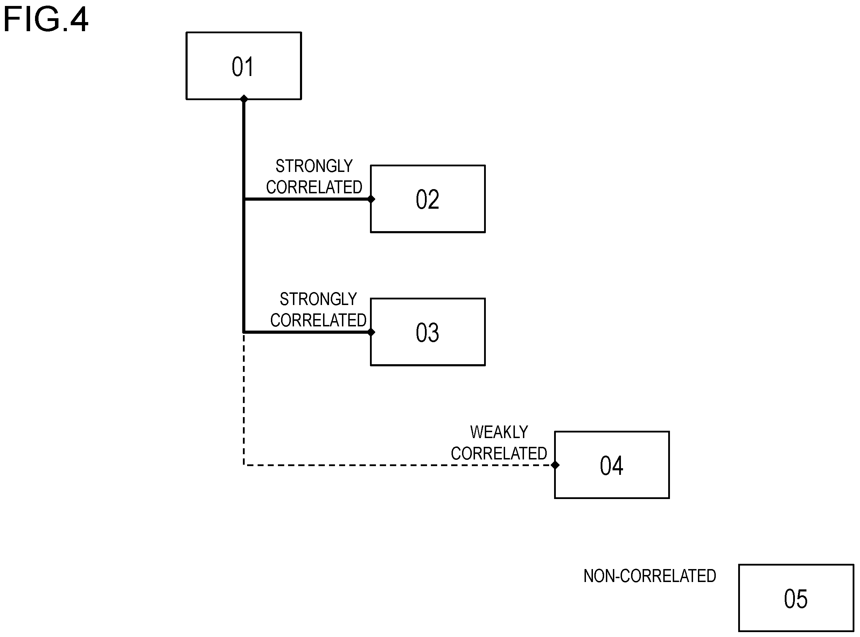

Correct answer probabilities (or comprehensions) of two categories can possibly have close relevance. For example, when the correct answer probability (or comprehension) for the basic nature of trigonometric functions $\sin\theta$ and $\cos\theta$ is high, it can be said that the correct answer probability (or comprehension) for the basic nature of $\tan\theta$, also a trigonometric function, tends to be high; they can be said to have close relevance. FIG. 4 shows an example of correlation between categories. In the example of the drawing, category 01 is strongly correlated with category 02 and category 03. Also, although not as strongly as categories 02, 03, category 04 is weakly correlated with category 01. Category 05 is not correlated with category 01. If the user is studying category 01, for example, the correct answer probability (or comprehension) of category 01 varies depending on the learning result as a matter of course. Then, even if the learner has not learned categories 02, 03, 04 yet, the correct answer probability (or comprehension) of categories 02, 03, 04 will also vary depending on the learning result of category 01 since they are correlated with category 01. Here, the correct answer probability (or comprehension) of category 05, which is not correlated with category 01, does not vary.

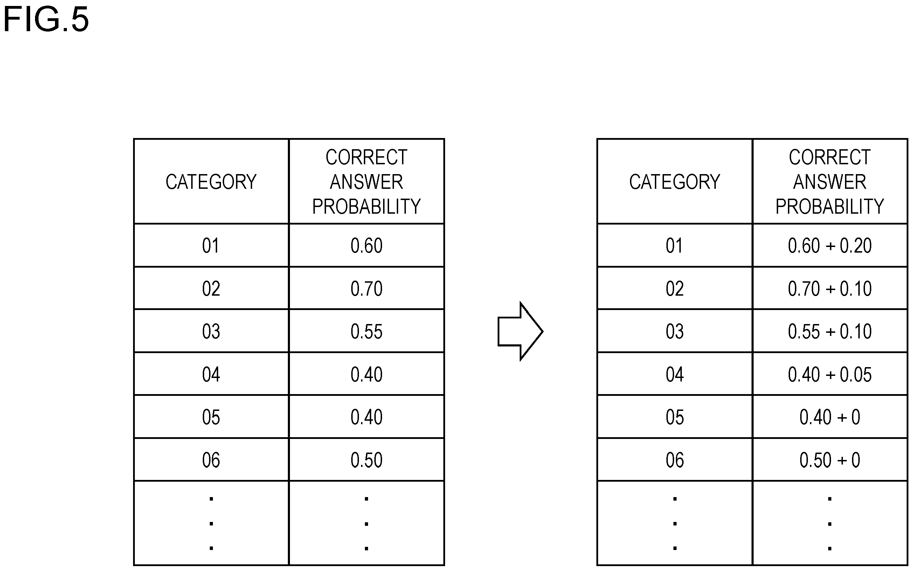

For example, as illustrated in FIG. 5, a case is possible where when the correct answer probability of category 01 has increased by 0.20 as a result of studying category 01, the correct answer probabilities for categories 02, 03, being strongly correlated with category 01, increases by 0.10 and the correct answer probability for category 04, being weakly correlated with category 01, increases by 0.05.

[Precedence-subsequence relation between categories]

Precedence-subsequence relation may be defined between categories. Precedence-subsequence relation is a parameter that defines a recommended sequence of learning of categories. More specifically, precedence-subsequence relation is a weighting parameter that is defined so that when a certain category is studied first, a category to be studied subsequently will have high learning effect. For example, in the example given above, if the user studies a category "the basic nature of $\sin\theta$ and $\cos\theta$" first, the learning effect is expected to become high if a category "the basic nature of $\tan\theta$" is chosen as a subsequent category.

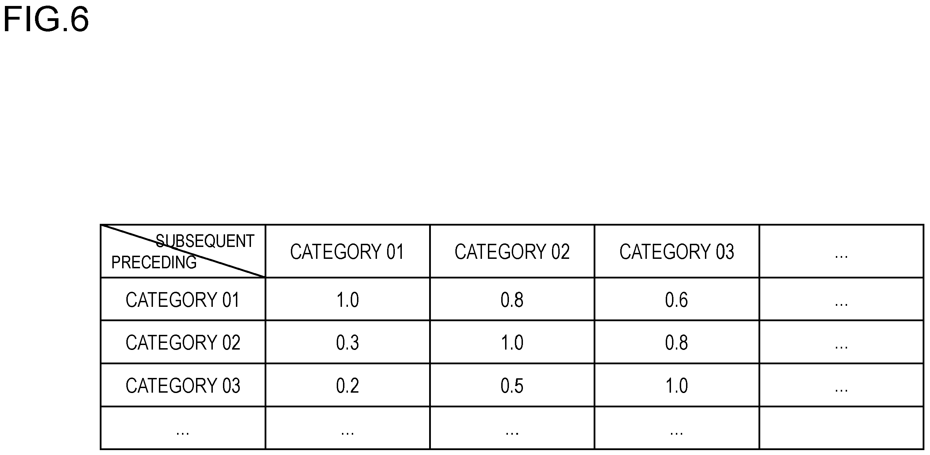

For instance, in the example of FIG. 6, if category 01 precedes, the learning effect is expected to be high if category 02, having a weighting parameter = 0.8, is chosen as the subsequent category. Similarly, if category 02 precedes, the learning effect is expected to be high if category 03, having a weighting parameter = 0.8, is chosen as the subsequent category. In FIG. 6, relationship between the categories may also be defined as consecutive values representing relationship among all learnings, including their sequence, across all the categories.

[The number of categories specified for content]

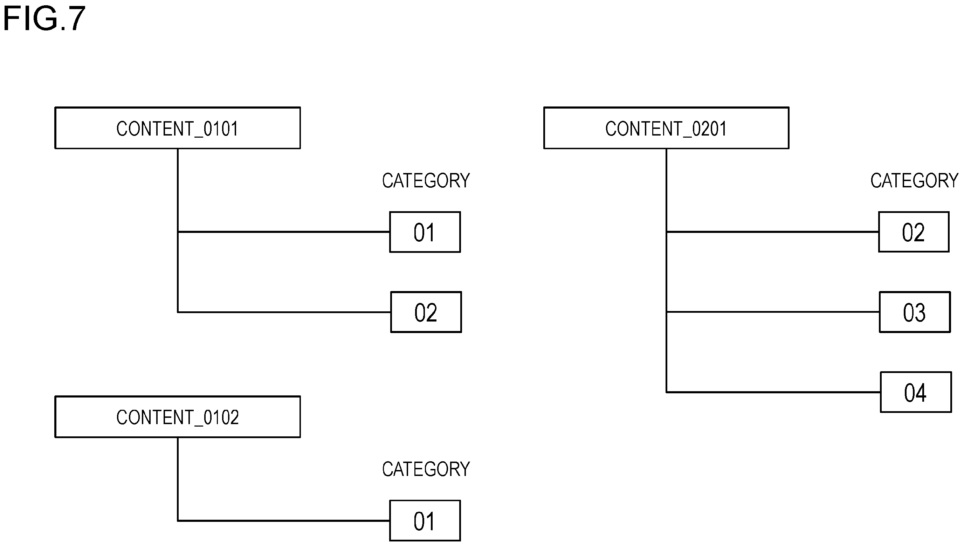

Each content is given at least one category. Content may be given two or more categories. In the example of FIG. 7, content_0101 is given categories 01, 02, content_0102 is given category 01, and content_0201 is given categories 02, 03, 04.

<Model storage unit 12A>

The model storage unit 12A stores a model (a DKT model) that takes learning data as input and generates the correct answer probability of the user for each category based on the learning data.

[DKT model]

DKT is an abbreviation of deep knowledge tracing. Deep knowledge tracing is a technique that uses a neural network (deep learning) to model the mechanism of a learner (user) acquiring knowledge.

A DKT model is optimized by supervised learning using a large amount of collected training data. While training data generally includes pairs of a vector and a label, the DKT model in this embodiment can employ correct/incorrect answer information for exercise problems and practice examination problems in the corresponding category as learning data for use as vectors and labels, for example. Since correlations between categories are learned by the DKT model, even when only learning data for some of the categories of a certain subject is input to the DKT model, the correct answer probabilities for all the categories of that subject will be estimated and output.

<Correct answer probability generation unit 12>

The correct answer probability generation unit 12 inputs learning data to the DKT model to generate the correct answer probability for each category (S12).

<Correct answer probability database 12B>

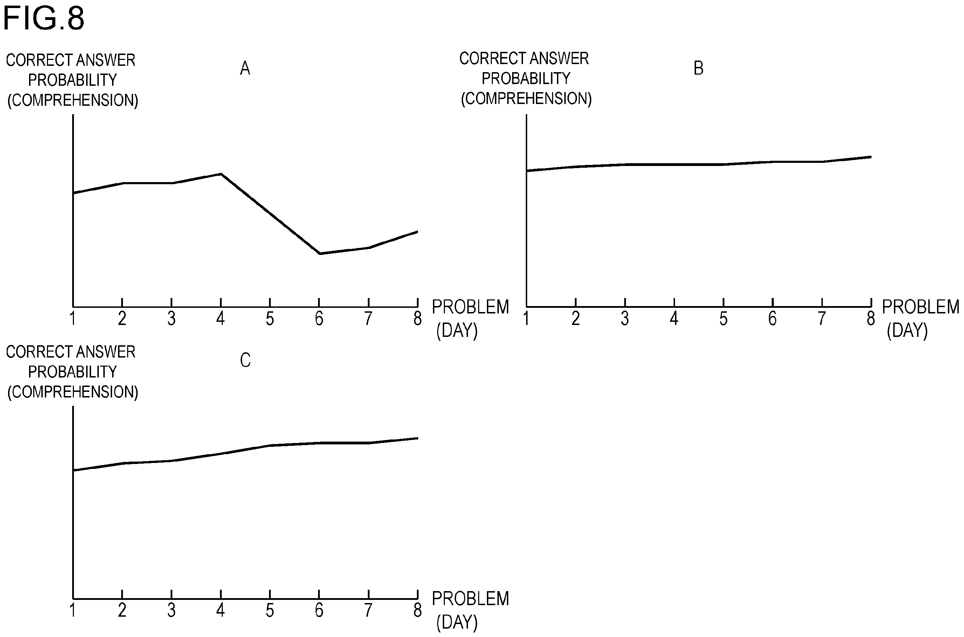

The correct answer probability database 12B accumulates the time-series data of the correct answer probability generated at step S12 on a per-user and per-category basis. FIGs. 8A, 8B, and 8C show examples of time-series data of correct answer probability (comprehension). FIG. 8A shows an example with large variations. The horizontal axis of the graph may be the number of problems (denoted as Problem) or the number of days (denoted as Day). The vertical axis of the graph is the correct answer probability (or the comprehension, to be discussed later). FIG. 8A can correspond to a case where the learner works on curriculum learning up to Problem 4 or Day 4 and learning data up to Problem 4 or Day 4 is sequentially input to the DKT model, which results in a temporary increase in the correct answer probability, but the correct answer rate of exercise problems is not good after the learner started adaptive learning starting at Problem 5 or Day 5 and learning data for Problem 5 or Day 5 onward is sequentially input to the DKT model, which results in a temporary decrease in the correct answer probability, for example. FIG. 8B can correspond to a case where the learner works on adaptive learning from Problem 1 to Problem 8 or Day 1 to Day 8 continuously and learning data is sequentially input to the DKT model, which results in a gradual increase in the correct answer probability, for example. FIG. 8C can correspond to a case where the learner works on curriculum learning up to Problem 2 or Day 2 and learning data up to Problem 2 or Day 2 is sequentially input to the DKT model, which results in a gradual increase in the correct answer probability, and then the learner works on adaptive learning starting at Problem 3 or Day 3 and learning data is sequentially input to the DKT model, which results in a gradual increase in the correct answer probability, for example.

<Range data acquisition unit 13>

The range data acquisition unit 13 acquires range data, which is data specifying the range of categories for estimating the learning effect for a specific user (S13). For example, if a specific user wants to estimate the learning effect for the scope of mid-term and end-of-term examinations of his or her school, the user interprets the scope specified for the mid-term and end-of-term examinations as categories and specifies (enters) all of the categories thus interpreted as range data. If a specific user wants to estimate learning effect in relation to mathematics in an entrance examination to a high school, the user specifies (enters) all the categories of mathematics that are studied in the first to the third years of junior high school as range data.

For acquisition of range data, a specific user may enter data such as page numbers of a textbook or unit titles to the range data acquisition unit 13 and the range data acquisition unit 13 may acquire range data by interpreting the data as categories.

<Comprehension and reliability generation unit 14>

The comprehension and reliability generation unit 14 acquires the range data from step S13, generates a comprehension which is based on the correct answer probability (for example, the most recent data) in the range data of the specific user and a reliability that assumes a smaller value as variations in the time-series data of the comprehension are larger, and outputs them in association with the categories (S14). For example, the comprehension and reliability generation unit 14 may output the most recent correct answer probability of each category in the range data as the comprehension of the category. The comprehension and reliability generation unit 14 may also assume that the user has not comprehended the category if its correct answer probability is equal to or lower than a certain value and provide a comprehension of 0, for example. The comprehension and reliability generation unit 14 may also correct the correct answer probability by multiplying it by $\alpha$ and subtracting $\beta$ from it as the comprehension if the correct answer probability exceeds the certain value, for example.

As the comprehension and reliability generation unit 14 takes into account variations in the time-series data of comprehension, it can also set the reliability to a predetermined value (preferably a small value) when the number of data in the time-series data of the comprehension is less than a predetermined threshold. If the comprehension is so low that it seems that study has not been started in the category of interest and relevant categories (not learned yet), that is, when the comprehension is less than a preset threshold (preferably a small value), the reliability could be set to a predetermined value (preferably a small value) even if the comprehension is stable.

The comprehension may also be generated and output based on a different definition than those described above. For example, consider a case where it is defined that the category belongs to one of category sets and one target category is present in each of the category sets.

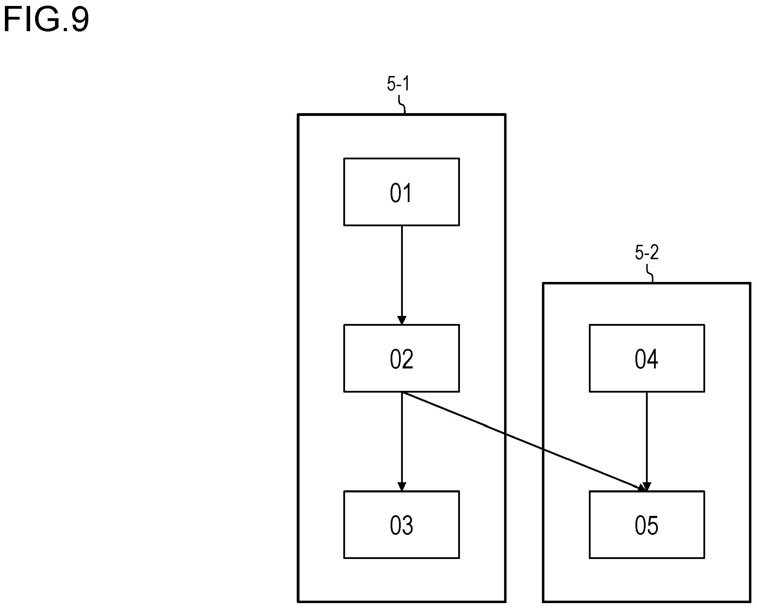

For example, as shown in FIG. 9, assume that categories 01, 02, 03 belong to a first category set 5-1 and categories 04, 05 belong to a second category set 5-2, with category 03 being the target category of the first category set 5-1 and category 05 being the target category of the second category set 5-2. For example, if multiple units (for example, units of vector and complex number) are in the scope of a regular examination, it is advantageous to include the categories of each unit into each category set and set a target category in each category set corresponding to each unit.

In this case, the comprehension and reliability generation unit 14 advantageously generates the correct answer probability for the target category included in the range data as the comprehension for the corresponding category set as a whole and generates the reliability for the category set as a whole based on the comprehension for the category set as a whole.

Two or more target categories may be present in one category set, in which case an average value of the correct answer probabilities of the two or more target categories can be the comprehension for the category set as a whole.

<Recommendation generation unit 15>

The recommendation generation unit 15 generates and outputs a recommendation, which is information indicative of a category belonging to at least any one of possible divisions into cases that are based on the relation of magnitude between the comprehension and a predetermined first threshold and the relation of magnitude between the reliability and a predetermined second threshold as a recommended target for the specific user's next study (S15).

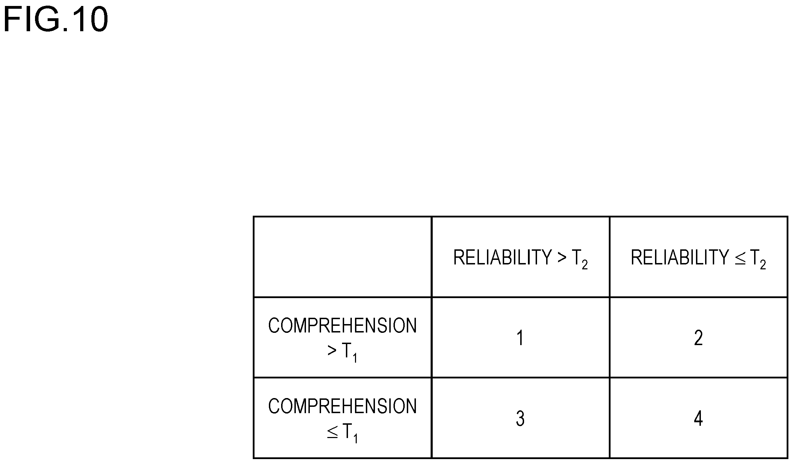

For example, as shown in FIG. 10, it is advantageous to divide cases into four patterns: (1) when the comprehension exceeds a first threshold $T_1$ and the reliability exceeds a second threshold $T_2$, (2) when the comprehension exceeds the first threshold $T_1$ and the reliability is equal to or lower than the second threshold $T_2$, (3) when the comprehension is equal to or lower than the first threshold $T_1$ and the reliability exceeds the second threshold $T_2$, and (4) when the comprehension is equal to or lower than the first threshold $T_1$ and the reliability is equal to or lower than the second threshold $T_2$. In the drawing, similar division into cases is also possible with comprehension $> T_1$ replaced by comprehension $\geq T_1$, comprehension $\leq T_1$ replaced by comprehension $< T_1$, reliability $> T_2$ replaced by reliability $\geq T_2$, and reliability $\leq T_2$ replaced by reliability $< T_2$.

The case 1 in the example of the drawing represents a case where the user's comprehension in the category exceeds a preset level ($T_1$; for example, $T_1 = 0.90$) and the reliability for the category also exceeds a preset level ($T_2$; for example, $T_2 = 0.90$). High comprehension means that the user's correct answer probability in the category is high, while high reliability means that variations in the time-series data of the comprehension are small, as illustrated in FIG. 8B. Accordingly, it is likely that the user's proficiency is high enough to consistently get high scores in the category and the user's learning can be determined to be sufficient.

The case 2 in the example of the drawing represents a case where the user's comprehension in the category exceeds the preset level ($T_1$) but the reliability for the category is equal to or lower than the preset level ($T_2$). Typically, this can be a case where the user marked a high correct answer probability in the most recent learning data of the category, but past time-series data of comprehension for the category indicates a period with low correct answer probability and large variations.

The case 3 in the example of the drawing represents a case where the user's comprehension in the category is equal to or lower than the preset level ($T_1$), while the reliability for the category exceeds the present level ($T_2$). Typically, this can be a case where the comprehension of the category has increased to some degree and also is stable as a result of the user proceeding with study of another category relevant to the category of interest, or a case where the comprehension of the category is stable as a result of the user proceeding with study of the category. In order to further increase the comprehension in these cases, the user has to proceed with study of the category of interest and consistently get high marks.

The case 4 in the example of the drawing represents a case where the user's comprehension in the category is equal to or lower than the preset level ($T_1$) and the reliability for the category is also equal to or lower than the preset level ($T_2$). Typically, this can be a case where the reliability is set at a predetermined small value when the comprehension is so low that it seems that study has not been started in the category of interest and relevant categories (not learned yet). This can be also a case where curriculum learning or the like has progressed to some extent and the score was low in the most recent adaptive learning, which has caused a significant drop in the most recent comprehension and large variations in the time-series data of comprehension (that is, low reliability), as illustrated in FIG. 8A.

For example, the recommendation generation unit 15 may generate and output a recommendation which is information indicative of the category corresponding to the case 4 as a recommended target for the user's next study. The recommendation generation unit 15 may also generate and output a recommendation with the category corresponding to the case 4 being the most recommended target, the category corresponding to the case 3 being the second most recommended target, and the category corresponding to the case 2 being the third most recommended target, for example.

Aside from the examples above, the recommendation generation unit 15 may generate recommendation by various criteria. For example, the recommendation generation unit 15 may generate and output a recommendation as a target that recommends a category with the comprehension close to 0.5 in the range data. Alternatively, the recommendation generation unit 15 may generate and output a recommendation as a target that recommends a category including a question that the user answered wrongly N times consecutively (N being an arbitrary integer equal to or greater than 2) in the most recent learning data, for example.

The recommendation generation unit 15 may also generate and output a recommendation indicative of a subsequent category based on the predefined precedence-subsequence relation (see the example of FIG. 6) as the recommended target for the next study when (1) the comprehension and reliability for the preceding category exceeds a predetermined threshold, and indicative of the preceding category as the recommended target for the next study when (3) the comprehension for the subsequent category based on the predefined precedence-subsequence relation is equal to or lower than the predetermined threshold and the reliability exceeds the predetermined threshold.

For example, in the category sets shown in FIG. 9, if the comprehension and reliability of the preceding category 01 correspond to the case 1, a recommendation may be generated with the subsequent category 02 being the recommended target for the next study, and if the comprehension and reliability of the subsequent category 02 correspond to the case 3, a recommendation may be generated and output with the preceding category 01 being the recommended target for the next study.

The recommendation generation unit 15 operating based on the precedence-subsequence relation can prevent a category that is distant from the previously learned category in terms of content from becoming a recommended target for the next study.

When category sets and target categories are set as shown in FIG. 9 and multiple category sets are included in range data, the recommendation generation unit 15 may produce a flag to specify any category set that is not learned yet among the multiple category sets at a predetermined probability, and generate and output a recommendation which is information indicative of a certain category in the category set specified by the flag as a recommended target for the specific user's next study, for example.

The recommendation generation unit 15 may also generate a recommendation by using multiple ones of the recommendation generation rules described above in combination.

The recommendation generation unit 15 may also predict an end-of-study date from the comprehension and reliability of each category in the range data, determine whether the predicted end-of-study date is within a preset period, and output the result of determination as the degree of progress. The degree of progress may be an index that indicates whether the comprehension is estimated to exceed a preset threshold within a preset period or not by estimating change in the comprehension in future from the time-series data of the comprehension generated by the comprehension and reliability generation unit 14, for example.

The learning effect estimation apparatus 1 according to this embodiment defines two parameters: the comprehension and the reliability, based on a correct answer probability generated by means of a DKT model that uses a neural network (deep learning). It can hence estimate the learning effect for a user based on the two parameters while reflecting various aspects of the mechanism of how humans understand things.

[Saturation of correct answer probability output by DKT model]

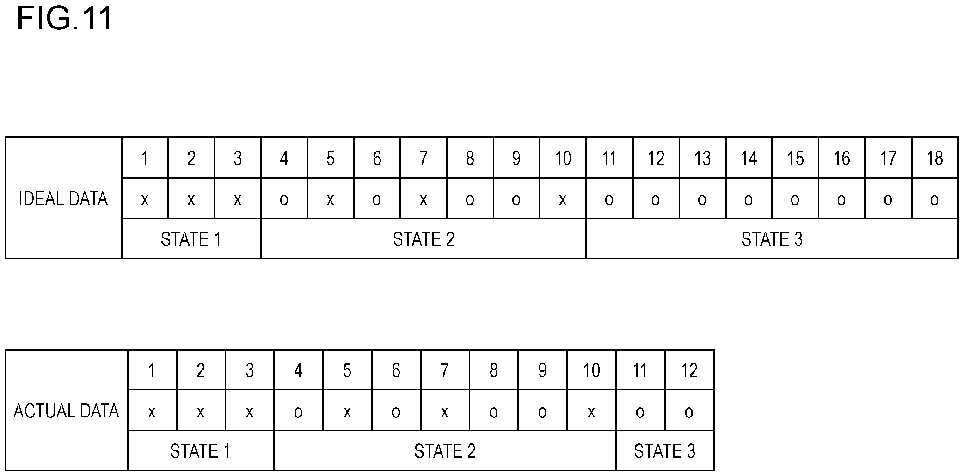

When correct/incorrect answer information for practice problems and exercise problems is used as the vectors and labels of training data, bias can occur in the DKT model being learned. For example, as shown in FIG. 11, when assuming that learning related to a certain category can be classified into State 1 (a state where understanding of the category is insufficient), State 2 (a state where the user is in a process of trial and error in understanding the category), and State 3 (a state where the user sufficiently understands the category), it will be ideal for learning of the DKT model to acquire much data on State 3 and use them as training data as shown in the table "Ideal data" in FIG. 11. In practice, however, only little data on State 3 can be acquired in many cases, as shown in the table "Actual data" in the drawing.

This is probably because when a user studies a certain category, the timing of the user getting any "sense of acquisition" of deeper understanding of the category is often shortly after entering State 3. In this case, the user is likely to move on to study of other categories without repeating problem exercises in State 3, and data acquired as training data contains only a small amount of State 3 as shown in the table "Actual data" of the drawing.

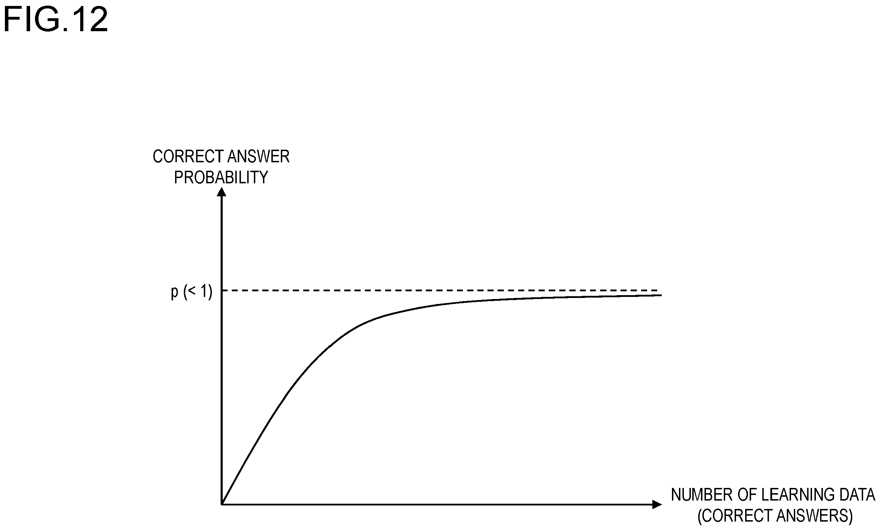

If the DKT model is learned based on such training data, it leads to a phenomenon in which the user's correct answer probability in the category of interest does not approach 1 but becomes saturated at a predetermined value p (< 1), as shown in FIG. 12, even with input of a large amount of data on correct answers to practice problems and exercise problems of the category as learning data for that category. For example, $p \approx 0.7$ is obtained. In order to address this issue, three approaches are disclosed below.

<<Approach 1: correction of correct answer probability or comprehension>>

For example, the correct answer probability generation unit 12 may input learning data to the DKT model to generate the correct answer probability of each category and output a corrected correct answer probability obtained by adding a predetermined value $\alpha$ to the generated correct answer probability. For example, $\alpha = 0.3$ may be set.

The correct answer probability generation unit 12 may also output a corrected correct answer probability obtained by multiplying the generated correct answer probability by a predetermined value $\alpha$, for example. In this case, $\alpha = 1.4$ may be set, for example.

Instead of correcting the correct answer probability, the comprehension may be corrected. In this case, the comprehension and reliability generation unit 14 may generate a comprehension based on the correct answer probability in the range data at step S13 and a reliability based on the comprehension, and output a corrected comprehension obtained by adding a predetermined value $\beta$ to the generated comprehension and the reliability.

The comprehension and reliability generation unit 14 may also output the comprehension not as a numerical value but as a label. For example, the comprehension and reliability generation unit 14 generates a comprehension (see the example of Table 1) which is a label generated based on the range to which the value of the correct answer probability belongs and a reliability which assumes a smaller value as the variations in the time-series data of the comprehension (label) are larger, and outputs them in association with the category.

Table 1

| Correct answer probability | | Comprehension |
|---|---|---|
| 0.7 or more | $\Rightarrow$ | Sufficient comprehension (label) |
| Less than 0.7 | $\Rightarrow$ | Insufficient comprehension (label) |

«Approach 2: Inserting dummy data»

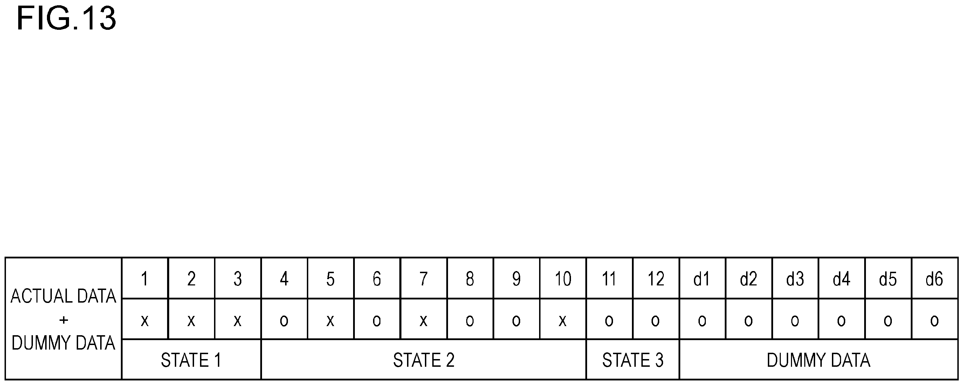

Dummy data may be inserted into training data for the DKT model. For example, as shown in FIG. 13, corrected training data which has been corrected by insertion of dummy data (data numbers d1, d2, ..., d6) imitating State 3 after State 3 (data numbers 11, 12) in training data may be generated, and the DKT model may be learned with this corrected training data. The amount of dummy data for insertion is arbitrary. This makes the training data closer to the ideal data shown in FIG. 11, thus preventing the phenomenon of the correct answer probability output by the DKT model becoming saturated at the predetermined value p (< 1).

«Approach 3: correcting a loss function»

The DKT model may be corrected by providing a correction term in a loss function used in learning of the DKT model. A loss function L for the DKT model is represented by the formula below in the case of mean square error, for example.

$$L = MSE(y_i, \hat{y}_i) = \frac{1}{n} \sum_{i=1}^{n} (y_i - \hat{y}_i)^2 \cdots (1)$$

n is the number of data, $y_i$ is an actual value, and $\hat{y}_i$ is a predicted value.

The loss function L as a mean absolute error is represented by the formula below.

$$L = MSE(y_i, \hat{y}_i) = \frac{1}{n} \sum_{i=1}^{n} |y_i - \hat{y}_i| \cdots (2)$$

For example, with respect to problems 1 to 7 of a practice examination, assume that multiple users' correct and incorrect answers to the problems 1 to 7 which are extracted so that the users' correct/incorrect answer information for problems 1 to 6 is the same as one another in order to handle problems 1 to 6 as vectors of training data are obtained as shown below.

Table 2

|  | 1 | 2 | 3 | 4 | 5 | 6 | 7 |
|---|---|---|---|---|---|---|---|
| User 1 | x | x | x | o | o | x | o |
| User 2 | x | x | x | o | o | x | o |
| User 3 | x | x | x | o | o | x | x |
| User 4 | x | x | x | o | o | x | x |
| User 5 | x | x | x | o | o | x | o |
|  | Equivalent to vector of teaching data | | | | | | Correct answer probability = 0.6 Equivalent to label |

When the correct/incorrect answer information for the problems 1 to 6 of the practice examination is used as the vector and the correct answer probability of the problem 7 of the practice examination is used as the label, the label, that is, the correct answer probability of problem 7 (= 0.6) corresponds to the actual value $y_i$. The predicted value $\hat{y}_i$ is the correct answer probability of problem 7 to be output by a DKT model that has been learned based on the vector and label above.

For example, a correction term is added on the basis of the loss function of Formula (1), creating Formula (1a).

$$L = MSE(y_i, \hat{y}_i) = \frac{1}{n} \sum_{i=1}^{n} (y_i - \hat{y}_i)^2 - s_{n-2} s_{n-1} s_n p \cdots (1a)$$

Here, $s_t$ is a parameter that is 1 when the t-th data is a correct answer and is 0 when it is an incorrect answer. Hence, $s_{n-2} s_{n-1} s_n$ is equivalent to a parameter that assumes a value of 1 when the most recent three problems (the n-2th, n-1th, and nth training data) are consecutively answered correctly among the number of data n of training data and assumes 0 otherwise. p is the correct answer probability generated by the DKT model and the correction term is the product of them multiplied by -1. Accordingly, if all of the most recent three problems are answered correctly, the correction term will be -p and the loss function L will be smaller as the correct answer probability p predicted by the model is higher. In this way, the DKT model can be corrected such that the predicted correct answer probability p is higher as the most recent correct answer rate is higher. The correction term is not limited to a term concerning the most recent three problems. For example, it may be a term concerning the most recent two problems or the most recent five problems.

[Learning including a period in which the user is not solving problems]

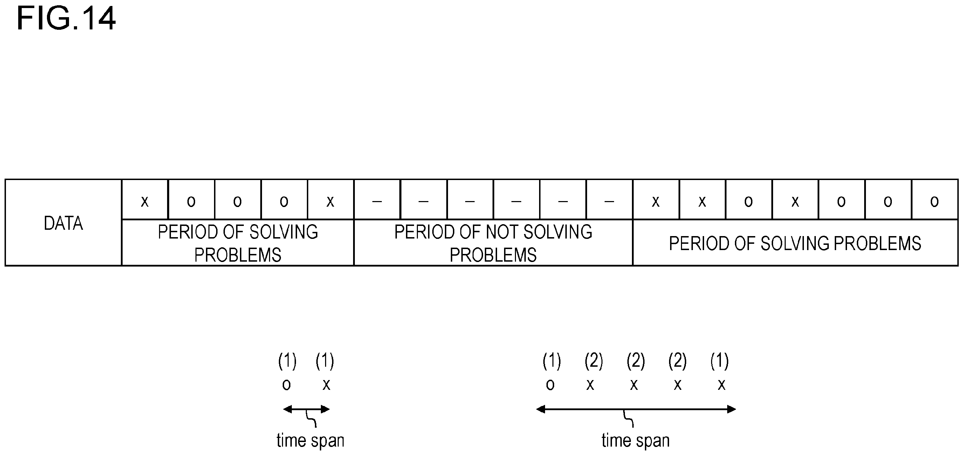

There was no difference in the training data input to the DKT model of the first embodiment between when a period (-) in which the user is not solving problems is inserted as shown in FIG. 14 and when it is not inserted, for example.
That is, when the data of FIG. 14 is used as training data, "xoooxxxoxooo" would be used and the length of a period in which the user is not solving problems and the like would not be taken into account. It is possible to take into account influence that is exerted by a period (-) in which the user is not solving problems on the correct answer probability (for example, a forgetting curve) by making training data include not only correct/incorrect answer information but also time span information (time span) representing a time interval between when the user solved the immediately preceding problem and when the user solved the problem of interest as a parameter and using it as the training data, as shown in the drawing.

<Appendix>

The apparatus according to the present invention has, as a single hardware entity, for example, an input unit to which a keyboard or the like is connectable, an output unit to which a liquid crystal display or the like is connectable, a communication unit to which a communication device (for example, communication cable) capable of communication with the outside of the hardware entity is connectable, a central processing unit (CPU, which may include cache memory and/or registers), RAM or ROM as memories, an external storage device which is a hard disk, and a bus that connects the input unit, the output unit, the communication unit, the CPU, the RAM, the ROM, and the external storage device so that data can be exchanged between them. The hardware entity may also include, for example, a device (drive) capable of reading and writing a recording medium such as a CD-ROM as desired. A physical entity having such hardware resources may be a general-purpose computer, for example.

The external storage device of the hardware entity has stored therein programs necessary for embodying the aforementioned functions and data necessary in the processing of the programs (in addition to the external storage device, the programs may be prestored in ROM as a storage device exclusively for reading out, for example). Also, data or the like resulting from the processing of these programs are stored in the RAM and the external storage device as appropriate.

In the hardware entity, the programs and data necessary for processing of the programs stored in the external storage device (or ROM and the like) are read into memory as necessary to be interpreted and executed/processed as appropriate by the CPU. As a consequence, the CPU embodies predetermined functions (the individual components represented above as units, means, or the like).

The present invention is not limited to the above embodiment, but modifications may be made within the scope of the present invention as appropriate. Also, the processes described in the embodiment may be executed not only in a chronological sequence in accordance with the order of their description but may be executed in parallel or separately according to the processing capability of the apparatus executing the processing or any necessity.

As already mentioned, when the processing functions of the hardware entities described in the embodiment (the apparatus of the present invention) are to be embodied with a computer, the processing details of the functions to be provided by the hardware entities are described by a program. By the program then being executed on the computer, the processing functions of the hardware entity are embodied on the computer.

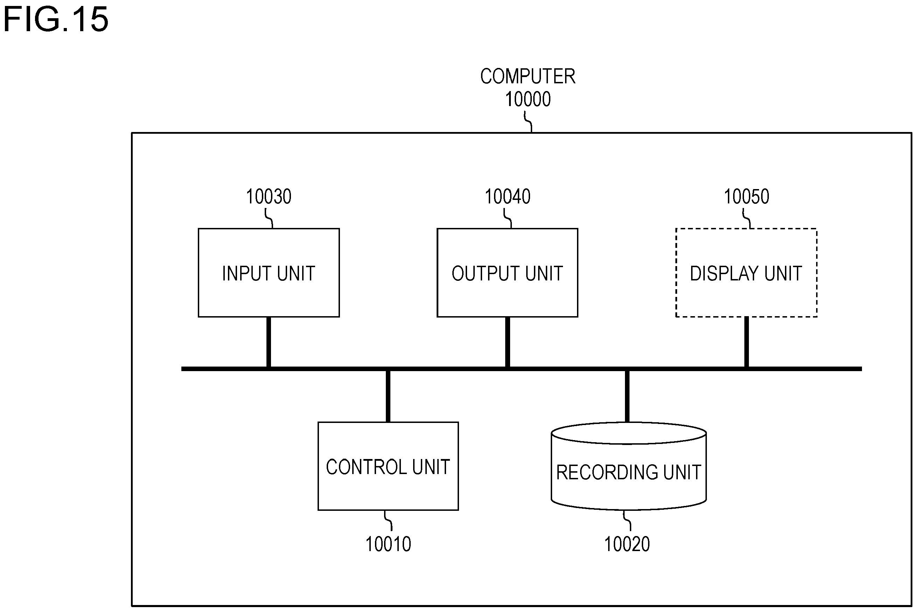

The various kinds of processing mentioned above can be implemented by loading a program for executing the steps of the above method into a recording unit 10020 of the computer shown in FIG. 15 to operate a control unit 10010, an input unit 10030, an output unit 10040, and the like.

The program describing the processing details can be recorded on a computer-readable recording medium. The computer-readable recording medium may be any kind, such as a magnetic recording device, an optical disk, a magneto-optical recording medium, or a semiconductor memory. More specifically, a magnetic recording device may be a hard disk device, flexible disk, or magnetic tape; an optical disk may be a DVD (digital versatile disc), a DVD-RAM (random access memory), a CD-ROM (compact disc read only memory), or a CD-R (recordable)/RW (rewritable); a magneto-optical recording medium may be an MO (magneto-optical disc); and a semiconductor memory may be EEP-ROM (electrically erasable and programmable-read only memory), for example.

Also, the distribution of this program is performed by, for example, selling, transferring, or lending a portable recording medium such as a DVD or a CD-ROM on which the program is recorded. Furthermore, a configuration may be adopted in which this program is distributed by storing the program in a storage device of a server computer and transferring the program to other computers from the server computer via a network.

The computer that executes such a program first, for example, temporarily stores the program recorded on the portable recording medium or the program transferred from the server computer in a storage device thereof. At the time of execution of processing, the computer then reads the program stored in the storage device thereof and executes the processing in accordance with the read program. Also, as another form of execution of this program, the computer may read the program directly from the portable recording medium and execute the processing in accordance with the program and, furthermore, every time the program is transferred to the computer from the server computer, the computer may sequentially execute the processing in accordance with the received program. Also, a configuration may be adopted in which the transfer of a program to the computer from the server computer is not performed and the above-described processing is executed by so-called application service provider (ASP)-type service by which the processing functions are implemented only by an instruction for execution thereof and result acquisition. Note that a program in this form shall encompass information that is used in processing by an electronic computer and acts like a program (such as data that is not a direct command to a computer but has properties prescribing computer processing).

Further, although the hardware entity was described as being configured via execution of a predetermined program on a computer in this form, at least some of these processing details may instead be embodied with hardware.

**Claims**

1. A learning effect estimation apparatus comprising:

   a model storage unit storing a model that takes learning data as input, the learning data being data on learning results of users and being assigned with categories for different learning purposes, and generates a correct answer probability of each of the users for each of the categories based on the learning data;
   a correct answer probability generation unit that inputs the learning data to the model to generate the correct answer probability of each of the categories;
   a correct answer probability database that accumulates time-series data of the correct answer probability for each of the users; and
   a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

2. The learning effect estimation apparatus according to Claim 1, comprising:
   a recommendation generation unit that generates and outputs a recommendation, the recommendation being information indicative of a category belonging to at least any one of possible divisions into cases that are based on a relation of magnitude between the comprehension and a predetermined first threshold and a relation of magnitude between the reliability and a predetermined second threshold as a recommended target for the specific user's next study.

3. The learning effect estimation apparatus according to Claim 1, comprising:
   a recommendation generation unit that generates and outputs a degree of progress.

4. The learning effect estimation apparatus according to Claim 1, wherein

   the categories belong to at least one of category sets, and one or more target categories are present in each of the category sets, and
   the comprehension and reliability generation unit generates the correct answer probability for the target category included in the range data as a comprehension for the corresponding category set as a whole, and generates a reliability for the category set as a whole based on the comprehension for the category set as a whole.

5. The learning effect estimation apparatus according to Claim 1,
   wherein the range data is acquired based on the categories entered by the user, or data entered by the user is converted into the categories and the range data is acquired based on the converted categories.

6. The learning effect estimation apparatus according to Claim 2,
   wherein the recommendation generation unit generates the recommendation based on precedence-subsequence relation, the precedence-subsequence relation being a parameter that defines a predefined recommended sequence of learning of categories.

7. The learning effect estimation apparatus according to Claim 4, comprising:
   a recommendation generation unit that, when a plurality of category sets are included in the range data, specifies a category set that is not learned yet among the plurality of category sets at a predetermined probability, and generates and outputs a recommendation which is information indicative of a certain category in the specified category set as a recommended target for the specific user's next study.

8. A learning effect estimation apparatus comprising:

   a model storage unit storing a model that takes learning data as input, the learning data being data on learning results of users and being assigned with categories for different learning purposes, and generates a correct answer probability of each of the users for each of the categories based on the learning data;
   a correct answer probability generation unit that inputs the learning data to the model to generate the correct answer probability of each of the categories, and outputs a corrected correct answer probability obtained by adding a predetermined value to the generated correct answer probability;

a correct answer probability database that accumulates time-series data of the corrected correct answer probability for each of the users; and

a comprehension and reliability generation unit that acquires range data, the range data being data specifying a range of categories for estimating a learning effect for a specific user, generates a comprehension which is based on the corrected correct answer probability in the range data of the specific user and a reliability that assumes a smaller value as variations in time-series data of the comprehension are larger, and outputs the comprehension and the reliability in association with the categories.

9. A learning effect estimation apparatus comprising:

a model storage unit storing a model that takes learning data as input, the learning data being data on learning results of users and being assigned with categories for different learning purposes, and generates a correct answer probability of each of the users for each of the categories based on the learning data;

a correct answer probability generation unit that inputs the learning data to the model to generate the correct answer probability of each of the categories;

a correct answer probability database that accumulates time-series data of the correct answer probability for each of the users; and

a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs a corrected comprehension obtained by adding a predetermined value to the generated comprehension and the reliability in association with the categories.

10. A learning effect estimation apparatus comprising:

a model storage unit storing a model that takes learning data as input, the learning data being data on learning results of users and being assigned with categories for different learning purposes, and generates a correct answer probability of each of the users for each of the categories based on the learning data;

a correct answer probability generation unit that inputs the learning data to the model to generate the correct answer probability of each of the categories;

a correct answer probability database that accumulates time-series data of the correct answer probability for each of the users; and

a comprehension and reliability generation unit that acquires range data, the range data being data specifying a range of categories for estimating a learning effect for a specific user, generates a comprehension which is a label generated based on a range to which a value of the correct answer probability in the range data of the specific user belongs and a reliability that assumes a smaller value as variations in time-series data of the comprehension are larger, and outputs the comprehension and the reliability in association with the categories.

11. A learning effect estimation apparatus comprising:

a model storage unit storing a model that takes learning data as input, the learning data being data on learning results of users and being assigned with categories for different learning purposes, and generates a correct answer probability of each of the users for each of the categories based on the learning data, the model being learned with corrected training data which has been corrected by insertion of dummy data imitating a state where a user sufficiently understands a category of interest into training data for that category;

a correct answer probability generation unit that inputs the learning data to the model to generate the correct answer probability of each of the categories;

a correct answer probability database that accumulates time-series data of the correct answer probability for each of the users; and

a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

12. A learning effect estimation apparatus comprising:

a model storage unit storing a model that takes learning data as input, the learning data being data on learning results of users and being assigned with categories for different learning purposes, and generates a correct answer probability of each of the users for each of the categories based on the learning data, the model being learned with addition of a correction term to a loss function for the model, the correction term being generated by multiplying, by -1, a product of a parameter that assumes a value of 1 when a predetermined number of most recent problems are consecutively answered correctly and assumes 0 otherwise and the correct answer probability generated by the model;

a correct answer probability generation unit that inputs the learning data to the model to generate the correct answer probability of each of the categories;

a correct answer probability database that accumulates time-series data of the correct answer probability for each of the users; and

a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

13. A learning effect estimation apparatus comprising:

a model storage unit storing a model that takes learning data as input, the learning data being data on learning results of users and being assigned with categories for different learning purposes, and generates a correct answer probability of each of the users for each of the categories based on the learning data, the model being learned based on training data having time span information representing a time interval between when the user solved an immediately preceding problem and when the user solved a problem of interest as a parameter in addition to correct/incorrect answer information;

a correct answer probability generation unit that inputs the learning data to the model to generate the correct answer probability of each of the categories;

a correct answer probability database that accumulates time-series data of the correct answer probability for each of the users; and

a comprehension and reliability generation unit that acquires range data, the range data being data specifying a range of categories for estimating a learning effect for a specific user, generates a comprehension which is based on the correct answer probability in the range data of the specific user and a reliability that assumes a smaller value as variations in time-series data of the comprehension are larger, and outputs the comprehension and the reliability in association with the categories.

14. A learning effect estimation method comprising:

a step of storing a model that takes learning data as input, the learning data being data on learning results of users and being assigned with categories for different learning purposes, and generates a correct answer probability of each of the users for each of the categories based on the learning data;

a step of inputting the learning data to the model to generate the correct answer probability of each of the categories;

a step of accumulating time-series data of the correct answer probability for each of the users; and

a step of acquiring range data, the range data being data specifying a range of categories for estimating a learning effect for a specific user, generating a comprehension which is based on the correct answer probability in the range data of the specific user and a reliability that assumes a smaller value as variations in time-series data of the comprehension are larger, and outputting the comprehension and the reliability in association with the categories.

15. The learning effect estimation method according to Claim 14, comprising:

a step of generating and outputting a recommendation, the recommendation being information indicative of a category belonging to at least any one of possible divisions into cases that are based on a relation of magnitude between the comprehension and a predetermined first threshold and a relation of magnitude between the reliability and a predetermined second threshold as a recommended target for the specific user's next study.

16. The learning effect estimation method according to Claim 14, wherein

the categories belong to at least one of category sets, and one or more target categories are present in each of the category sets, and
the correct answer probability for the target category included in the range data is generated as a comprehension for the corresponding category set as a whole, and a reliability for the category set as a whole is generated based on the comprehension for the category set as a whole.

17. The learning effect estimation method according to Claim 16, comprising:
a step of, when a plurality of category sets are included in the range data, specifying a category set that is not learned yet among the plurality of category sets at a predetermined probability, and generating and outputting a recommendation which is information indicative of a certain category in the specified category set as a recommended target for the specific user's next study.

18. A learning effect estimation method comprising:

a step of storing a model that takes learning data as input, the learning data being data on learning results of users and being assigned with categories for different learning purposes, and generates a correct answer probability of each of the users for each of the categories based on the learning data;
a step of inputting the learning data to the model to generate the correct answer probability of each of the categories, and outputting a corrected correct answer probability obtained by adding a predetermined value to the generated correct answer probability;
a step of accumulating time-series data of the corrected correct answer probability for each of the users; and
a step of acquiring range data, the range data being data specifying a range of categories for estimating a learning effect for a specific user, generating a comprehension which is based on the corrected correct answer probability in the range data of the specific user and a reliability that assumes a smaller value as variations in time-series data of the comprehension are larger, and outputting the comprehension and the reliability in association with the categories.

19. A learning effect estimation method comprising:

a step of storing a model that takes learning data as input, the learning data being data on learning results of users and being assigned with categories for different learning purposes, and generates a correct answer probability of each of the users for each of the categories based on the learning data;
a step of inputting the learning data to the model to generate the correct answer probability of each of the categories;
a step of accumulating time-series data of the correct answer probability for each of the users; and
a step of acquiring range data, the range data being data specifying a range of categories for estimating a learning effect for a specific user, generating a comprehension which is based on the correct answer probability in the range data of the specific user and a reliability that assumes a smaller value as variations in time-series data of the comprehension are larger, and outputting a corrected comprehension obtained by adding a predetermined value to the generated comprehension and the reliability in association with the categories.

20. A learning effect estimation method comprising:

a step of storing a model that takes learning data as input, the learning data being data on learning results of users and being assigned with categories for different learning purposes, and generates a correct answer probability of each of the users for each of the categories based on the learning data;
a step of inputting the learning data to the model to generate the correct answer probability of each of the categories;
a step of accumulating time-series data of the correct answer probability for each of the users; and
a step of acquiring range data, the range data being data specifying a range of categories for estimating a learning effect for a specific user, generating a comprehension which is a label generated based on a range to which a value of the correct answer probability in the range data of the specific user belongs and a reliability that assumes a smaller value as variations in time-series data of the comprehension are larger, and outputting the comprehension and the reliability in association with the categories.

21. A learning effect estimation method comprising:

a step of storing a model that takes learning data as input, the learning data being data on learning results of users and being assigned with categories for different learning purposes, and generates a correct answer probability of each of the users for each of the categories based on the learning data, the model being learned with corrected training data which has been corrected by insertion of dummy data imitating a state where a user sufficiently understands a category of interest into training data for that category;

a step of inputting the learning data to the model to generate the correct answer probability of each of the categories;

a step of accumulating time-series data of the correct answer probability for each of the users; and

a step of acquiring range data, the range data being data specifying a range of categories for estimating a learning effect for a specific user, generating a comprehension which is based on the correct answer probability in the range data of the specific user and a reliability that assumes a smaller value as variations in time-series data of the comprehension are larger, and outputting the comprehension and the reliability in association with the categories.

22. A learning effect estimation method comprising:

a step of storing a model that takes learning data as input, the learning data being data on learning results of users and being assigned with categories for different learning purposes, and generates a correct answer probability of each of the users for each of the categories based on the learning data, the model being learned with addition of a correction term to a loss function for the model, the correction term being generated by multiplying, by -1, a product of a parameter that assumes a value of 1 when a predetermined number of most recent problems are consecutively answered correctly and assumes 0 otherwise and the correct answer probability generated by the model;

a step of inputting the learning data to the model to generate the correct answer probability of each of the categories;

a step of accumulating time-series data of the correct answer probability for each of the users; and

a step of acquiring range data, the range data being data specifying a range of categories for estimating a learning effect for a specific user, generating a comprehension which is based on the correct answer probability in the range data of the specific user and a reliability that assumes a smaller value as variations in time-series data of the comprehension are larger, and outputting the comprehension and the reliability in association with the categories.

23. A learning effect estimation method comprising:

a step of storing a model that takes learning data as input, the learning data being data on learning results of users and being assigned with categories for different learning purposes, and generates a correct answer probability of each of the users for each of the categories based on the learning data, the model being learned based on training data having time span information representing a time interval between when the user solved an immediately preceding problem and when the user solved a problem of interest as a parameter in addition to correct/incorrect answer information;

a step of inputting the learning data to the model to generate the correct answer probability of each of the categories;

a step of accumulating time-series data of the correct answer probability for each of the users; and

a step of acquiring range data, the range data being data specifying a range of categories for estimating a learning effect for a specific user, generating a comprehension which is based on the correct answer probability in the range data of the specific user and a reliability that assumes a smaller value as variations in time-series data of the comprehension are larger, and outputting the comprehension and the reliability in association with the categories.

24. A program for causing a computer to function as the learning effect estimation apparatus according to any one of Claims 1 to 13.

# FIG.1

RANGE DATA

MODEL STORAGE UNIT
12A

RANGE DATA ACQUISITION UNIT
13

LEARNING DATA →

LEARNING DATA ACQUISITION UNIT
11

CORRECT ANSWER PROBABILITY GENERATION UNIT
12

COMPREHENSION AND RELIABILITY GENERATION UNIT
14

→ COMPREHENSION, RELIABILITY

CORRECT ANSWER PROBABILITY DATABASE
12B

RECOMMENDATION GENERATION UNIT
15

→ RECOMMENDATION, DEGREE OF PROGRESS

1 LEARNING EFFECT ESTIMATION APPARATUS

EP 4 060 645 A1

# FIG.2

```
        ┌─────────┐
        │  START  │
        └─────────┘
             │
┌────────────────────────────────┐
│      ACQUIRE LEARNING DATA      │──S11
└────────────────────────────────┘
             │
┌────────────────────────────────┐
│ INPUT LEARNING DATA TO MODEL TO GENERATE │──S12
│   CORRECT ANSWER PROBABILITY   │
└────────────────────────────────┘
             │
┌────────────────────────────────┐
│       ACQUIRE RANGE DATA        │──S13
└────────────────────────────────┘
             │
┌────────────────────────────────┐
│       GENERATE AND OUTPUT       │──S14
│  COMPREHENSION AND RELIABILITY  │
└────────────────────────────────┘
             │
┌ ─ ─ ─ ─ ─ ─ ─ ─ ─ ─ ─ ─ ─ ─ ─ ┐
   GENERATE RECOMMENDATION       ──S15
└ ─ ─ ─ ─ ─ ─ ─ ─ ─ ─ ─ ─ ─ ─ ─ ┘
             │
        ┌─────────┐
        │   END   │
        └─────────┘
```

EP 4 060 645 A1

# FIG.3

CONTENT
- CURRICULUM
  - SCENARIO
  - PRACTICE PROBLEM
- ADAPTIVE
  - EXERCISE PROBLEM

FIG.4

01

STRONGLY
CORRELATED

02

STRONGLY
CORRELATED

03

WEAKLY
CORRELATED

04

NON-CORRELATED

05

EP 4 060 645 A1

# FIG.5

| CATEGORY | CORRECT ANSWER PROBABILITY |
|----------|----------------------------|
| 01 | 0.60 |
| 02 | 0.70 |
| 03 | 0.55 |
| 04 | 0.40 |
| 05 | 0.40 |
| 06 | 0.50 |
| . . . | . . . |

⇒

| CATEGORY | CORRECT ANSWER PROBABILITY |
|----------|----------------------------|
| 01 | 0.60 + 0.20 |
| 02 | 0.70 + 0.10 |
| 03 | 0.55 + 0.10 |
| 04 | 0.40 + 0.05 |
| 05 | 0.40 + 0 |
| 06 | 0.50 + 0 |
| . . . | . . . |

# FIG.6

EP 4 060 645 A1

| PRECEDING \\ SUBSEQUENT | CATEGORY 01 | CATEGORY 02 | CATEGORY 03 | ... |
|---|---|---|---|---|
| CATEGORY 01 | 1.0 | 0.8 | 0.6 | ... |
| CATEGORY 02 | 0.3 | 1.0 | 0.8 | ... |
| CATEGORY 03 | 0.2 | 0.5 | 1.0 | ... |
| ... | ... | ... | ... | |

# FIG.7

CONTENT_0101

CATEGORY

01

02

CONTENT_0102

CATEGORY

01

CONTENT_0201

CATEGORY

02

03

04

# FIG.8

CORRECT ANSWER
PROBABILITY
(COMPREHENSION)

A

PROBLEM
(DAY)

1  2  3  4  5  6  7  8

CORRECT ANSWER
PROBABILITY
(COMPREHENSION)

B

PROBLEM
(DAY)

1  2  3  4  5  6  7  8

CORRECT ANSWER
PROBABILITY
(COMPREHENSION)

C

PROBLEM
(DAY)

1  2  3  4  5  6  7  8

EP 4 060 645 A1

FIG.9

# FIG.10

|  | RELIABILITY $> T_2$ | RELIABILITY $\leq T_2$ |
|---|---|---|
| COMPREHENSION $> T_1$ | 1 | 2 |
| COMPREHENSION $\leq T_1$ | 3 | 4 |

## FIG.11

EP 4 060 645 A1

| IDEAL DATA | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| | x | x | x | o | x | o | x | o | o | x | o | o | o | o | o | o | o | o |
| | STATE 1 | | | STATE 2 | | | | | | | STATE 3 | | | | | | | |

| ACTUAL DATA | 1 | 2 | 3 | 4 | 5 | 6 | 7 | 8 | 9 | 10 | 11 | 12 |
|---|---|---|---|---|---|---|---|---|---|---|---|---|
| | x | x | x | o | x | o | x | o | o | x | o | o |
| | STATE 1 | | | STATE 2 | | | | | | | STATE 3 | |

# FIG.12

CORRECT ANSWER
PROBABILITY

$p\ (<1)$

NUMBER OF LEARNING DATA
(CORRECT ANSWERS)

# FIG.13

| ACTUAL DATA + DUMMY DATA | 1 | 2 | 3 | 4 | 5 | 6 | 7 | 8 | 9 | 10 | 11 | 12 | d1 | d2 | d3 | d4 | d5 | d6 |
|---|---|---|---|---|---|---|---|---|---|---|---|---|---|---|---|---|---|---|
| | x | x | x | o | x | o | x | o | o | x | o | o | o | o | o | o | o | o |
| | STATE 1 | | | STATE 2 | | | | | | | STATE 3 | | DUMMY DATA | | | | | |

# FIG.14

| DATA | x | o | o | o | x | − | − | − | − | − | − | x | x | o | x | o | o | o | o |
|------|---|---|---|---|---|---|---|---|---|---|---|---|---|---|---|---|---|---|---|
| | PERIOD OF SOLVING PROBLEMS | | | | PERIOD OF NOT SOLVING PROBLEMS | | | | | | | PERIOD OF SOLVING PROBLEMS | | | | | | | |

(1) (1)
o  x

⟷ time span

(1) (2) (2) (2) (1)
o  x  x  x  x

⟷ time span

# FIG.15

## INTERNATIONAL SEARCH REPORT

International application No.

PCT/JP2020/040868

### A. CLASSIFICATION OF SUBJECT MATTER
Int. Cl. G09B7/04(2006.01)i, G09B19/00(2006.01)i, G06N3/08(2006.01)i, G06Q50/20(2012.01)i
FI: G09B19/00 H, G09B7/04, G06Q50/20 300, G06N3/08
According to International Patent Classification (IPC) or to both national classification and IPC

### B. FIELDS SEARCHED
Minimum documentation searched (classification system followed by classification symbols)
Int. Cl. G09B7/00-7/12, 19/00, G06N3/08, G06Q50/20

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 3-125179 A (FUJITSU LTD.) 28 May 1991, entire text, all drawings | 1-24 |
| A | JP 2005-215023 A (RECRUIT MAN SOLUTIONS CO., LTD.) 11 August 2005, abstract | 1-24 |
| A | JP 2018-205447 A (FUJITSU LTD.) 27 December 2018, abstract | 1-24 |
| A | US 2018/0151084 A1 (ELECTRONICS AND TELECOMMUNICATIONS RESEARCH INSTITUTE) 31 May 2018, paragraphs [0007], [0008] | 1-24 |

☐ Further documents are listed in the continuation of Box C.  ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 26.11.2020 | 08.12.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/040868

| Patent Documents referred to in the Report | Publication Date | Patent Family | Publication Date |
|---|---|---|---|
| JP 3-125179 A | 28.05.1991 | (Family: none) | |
| JP 2005-215023 A | 11.08.2005 | (Family: none) | |
| JP 2018-205447 A | 27.12.2018 | US 2018/0350257 A1 abstract | |
| US 2018/0151084 A1 | 31.05.2018 | KR 10-2018-0061999 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012208143 A